(19)

Europäisches
Patentamt
European
Patent Office
Office européen
des brevets

(11) **EP 1 750 379 A1**

(12) **EUROPEAN PATENT APPLICATION**

(43) Date of publication:
**07.02.2007 Bulletin 2007/06**

(51) Int Cl.:
*H04B 7/26* [(2006.01)]    *H04L 27/22* [(2006.01)]

(21) Application number: **05292046.9**

(22) Date of filing: **30.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.08.2005 US 705528**

(71) Applicant: **Nortel Networks Limited St.Laurent, Quebec H4S 2A9 (CA)**

(72) Inventors:
• **Jard, Alexandre Suresnes 92150 (FR)**
• **Meyer, Laurent Orsay 91400 (FR)**

(74) Representative: **Bird, William Edward et al Bird Goen & Co., Klein Dalenstraat 42A 3020 Winksele (BE)**

(54) **Method and apparatus for estimation of a frequency offset due to the Doppler effect**

(57) Methods and apparatus for the correction of Doppler frequency offset in a terrestrial wireless communications system are described, comprising:
determining a first estimation of frequency offset $f_1$ in a received signal over a first time period of the received signal;
determining a second estimation of frequency offset $f_2$ in a received signal over a longer time period of the received signal; and
determining an overall frequency offset $f_0$ based on both the first and second estimations.

The determined offset may be applied to the received signal in conventional ways.

Fig. 4

EP 1 750 379 A1

**Description**

**FIELD OF THE INVENTION**

This invention relates to wireless telecommunications especially telephone systems and methods of operating the same as well as network elements which may be used in such systems adapted for estimation and correction of Doppler frequency offset during wireless communications.

**BACKGROUND TO THE INVENTION**

Cellular wireless communications systems are widely deployed and serve users who can be stationary or mobile. Mobile users can travel at a wide range of speeds, from a walking pace to much higher speeds for those travelling in cars and public transport. Relative movement between a user and a base station serving the user causes a number of problems to the cellular system. As a user moves, they will pass from the coverage area of one cell to the coverage area of another cell. The system must ensure that users are handed-off from one cell to another quickly enough to prevent calls from being dropped. Movement of a user also induces a Doppler frequency shift in the carrier frequency used for communication. The Doppler frequency shift varies with the speed of movement of the user. Cellular communications systems include a mechanism for accommodating a limited range of Doppler frequency shifts. Generally in wireless telephone communication networks accurate clocks are used and the Doppler shift is low as the speeds are low. Convention means for carrier offset correction only have to deal with small offsets. Hence, conventional means for determining frequency offset are sufficient because the offset is small. However, these conventional methods have been found to be unsatisfactory when a user is travelling at a high speed, such as a user travelling on a high-speed train such as the French TGV or Spanish AVE. The problem is particularly serious when the user is travelling in line of sight (LOS) of the base station, e.g. towards, or away from, a base station at high speeds as is often the case where base stations are mounted alongside a railway track. Doppler frequency shift can cause problems with the demodulation of a communications signal, particularly where a phase modulation scheme has been used to modulate data onto a carrier. This is particularly true at the base station where the Doppler shift is doubled. The base station sends at a frequency f and the mobile unit on the train receives this signal as being of a frequency f + Doppler shift. The mobile unit therefore adapts its transmit frequency to this value and such a transmitted signal is received at the base station as a frequency of f + 2 x Doppler shift. Hence, at the base station the Doppler shift is multiplied by two.

**SUMMARY OF THE INVENTION**

Accordingly, the present invention seeks to provide an improved methods and apparatus for dealing with frequency offsets in a terrestrial communications system.
A first aspect of the present invention provides a method of correcting for a frequency offset, e.g. a Doppler shift, in a terrestrial wireless communications system, especially a cellular system, comprising:

determining a first estimation of frequency offset $f_1$ in a received signal over a first time period of the received signal;
determining a second estimation of frequency offset $f_2$ in a received signal over a longer time period of the received signal; and
determining an overall frequency offset $f_0$ based on both the first and second estimations.

The first estimation, performed over a short time, can estimate the value of the frequency offset over a wider range of values than that which the second estimation is capable of. The second estimation has an advantage of being more accurate. The combination of the first and second offset estimations provides the advantages of estimating over a wide range and of achieving an accurate estimation.
The method also includes applying the determined overall frequency offset $f_0$ to the received signal. This may be done in a variety of ways. In one way the offset is used to correct local oscillators, e.g. voltage controlled oscillators or numerically controlled oscillators. Another way is to apply a correction to the received signal, e.g. a rotation of the complex signal representing a symbol.
Preferably, the step of determining a second estimation of frequency offset is capable of determining the frequency offset modulo n and the step of determining a first estimation of frequency offset is used to determine a number $r$ of multiples of the quantity $n$. The overall frequency offset is: $f_0 = f_2 + rn$.
Preferably, the value of $r$ obtained from the first estimation of frequency offset is verified before determining the overall frequency offset to prevent errors due to noise. Namely, in a noisy environment at the value of $r$ may be in error by plus or minus 1.
Further aspects of the invention provide a wireless terminal, a base station receiver, and a terrestrial wireless communications system which estimate (and correct) frequency offset in this manner. The base station receiver may be located so that a high speed train line (e.g. one with speeds in excess of 150, 200 or 250 km/hour) is within the radio coverage of the base station.

The functionality described here can be implemented in software, hardware or a combination of these. Accordingly, another aspect of the invention provides software for performing the method. The software can be stored on an electronic memory device, hard disk, optical disk or other machine-readable storage medium. The software may be delivered as a computer program product on a machine-readable carrier or it may be downloaded directly to a device via a network connection.

**BRIEF DESCRIPTION OF THE DRAWINGS**

Embodiments of the invention will be described, by way of example only, with reference to the accompanying drawings in which:

Figure 1 schematically shows a scenario in which Doppler shift can occur;
Figure 2 shows results of a frequency offset estimation method at bit rate;
Figure 3 shows results of a frequency offset estimation method at slot rate;
Figure 4 shows a method to estimate frequency offset in accordance with an embodiment of the invention;
Figures 5 and 6 show results obtained using the method of Figure 4;
Figure 7 shows the frequency offset estimation in a receive chain of user equipment.

DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

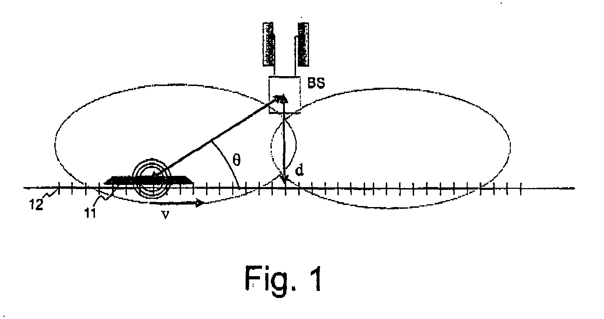

The invention aims to provide a robust method for detecting frequency offset in a LOS (Line Of Sight) environment of a wireless telecommunications system, especially a cellular system such as a mobile telephone system. This subject is of particular interest for networks deployed along railways with high speed trains (AVE in Spain and TGV in France) although is not limited to such applications. Figure 1 schematically shows a user equipment (UE) traveling in a train 11 along a track 12 as it approaches, and passes, a base station BS. A radio coverage area of the BS includes the track. The distance between the base station BS and track 12 is denoted $d$ and the train speed over time $t$ as $v$. It can be shown that the radial speed at time $t$ is expressed as:

$$v(\theta) = \frac{vt}{\sqrt{d^2 + v^2 t^2}} v$$

and the corresponding frequency offset caused by this movement is:

$$f(\theta) = f_0 \frac{v(\theta)}{c},$$

At the base station the offset will be $2f_0 \dfrac{v(\theta)}{c}$ as explained above.

Optionally, in a multipath environment, the receiver of the base station determines the most powerful path. The most powerful path may be determined by correlation in a conventional manner. Typically, the received signal is correlated either with itself (autocorrelation) or with a known sequence (cross-correlation) and a suitable parameter of the correlation is monitored, e.g. the power. Whether autocorrelation or cross-correlation is used may depend upon the type of training or synchronization sequence used in the wireless transmissions. The most powerful path can be determined as the correlation has the highest power. In accordance with a first aspect of the present invention a first coarse frequency offset is based on monitoring the received signal at the bit level. The method correlates one observation with another observation at distance of $i$ bits, i.e. over a short time. The value of $i$ can be one, three, or more, e.g. up to 8 or 10. Hence the separation between the two correlated bits is at a distance of $i$ times the bit interval. The component of the received signal, over one bit, can be written as: $a(t)=a.\exp(2\pi jT_{bit}t\Delta f)+n(t)$ when subject to Doppler shift (only LOS and no NLOS), where $a$ is a constant complex amplitude. The dot product of two observations separated by $i$ x $T_{bit}$ is:

$$d(i)=\langle a(t), a(t+i)\rangle=|a|^2.\exp(2\pi jiT_{bit}\Delta f)+\mu(i).$$

and from this a Maximum Likelihood estimation of $\Delta f$ can be derived:

$$\hat{\Delta f}=\frac{1}{2\pi iT_{bit}}\arctan\left(\frac{\text{Im}\sum_j d(j)}{\text{Re}\sum_j d(j)}\right).$$

To smooth the variations of the offset, various types of averaging may be used. A running average can be used. One particular type weights the observations so that the older observations have less effect. In the sum forming the average the older values are weighted with lower weighting values. With one preferred weighting, the above average is replaced by its exponential version. For example each average can be replaced by an average of the form $\sum_j \beta^{n-j}d(j)$, where

n is a time index. If the weight factor $\beta$ is less than 1, then the effect of the weighting parameter is to reduce contribution to the average provided by values of d(j) which are old. Decreasing the weighting parameter $\beta$ quickens the reactivity (i.e. the average will react faster to and be more influenced by recent observations and therefore reacts quickly to changes) but leads to a more noisy estimation. The *arctan* function can be realized through a look up table. This method allows determination of an offset of up to a maximum value of:

$$\Delta f=\frac{1}{iT_{bit}}.$$

Beyond this value, the result is ambiguous. In an aspect of the present invention, the coarse frequency offset is taken over a time period which is sufficiently short so that the frequency offset caused by Doppler shift and other offsets is not ambiguous at the speeds traveled by high speed trains. However, calculating the frequency offset over such a short time generally results in a poor accuracy due to noise. Accordingly, the results of the first frequency offset estimation are only used later for correcting a second more accurate frequency offset estimation.

The second more accurate frequency offset relies on consecutive observations accumulated during a longer time than at the bit level. For example, to reduce the effect of noise, consecutive observations are accumulated during one slot and the estimation is performed at the slot rate. The method works with:

$$\sum_{t=0}^{N_{bit}-1}a(t).$$

Also for this average a running average may be calculated. For example, the average may be calculated in such a way that older observations have less impact on the average value as they are multiplied by low weighting factors. A particularly preferred averaging schema is the one described above, i.e. in an exponential manner but averaged over a longer time to thereby mitigate the effect of noise.

As the time period for accumulation is longer than for the bit level estimation, the maximum Doppler frequency that can be tracked, given by the inter-observation time, is reduced. In this slot rate approach, it leads to an offset which can be detected within the range $\Delta f = \dfrac{1}{T_{slot}}$. For example, this may be typically 1500Hz or a range of -750 to 750Hz. If the offset exceeds this range, there is an ambiguous estimation modulo 1500Hz. According to the present invention, this ambiguity will be resolved by use of the first frequency offset estimation.

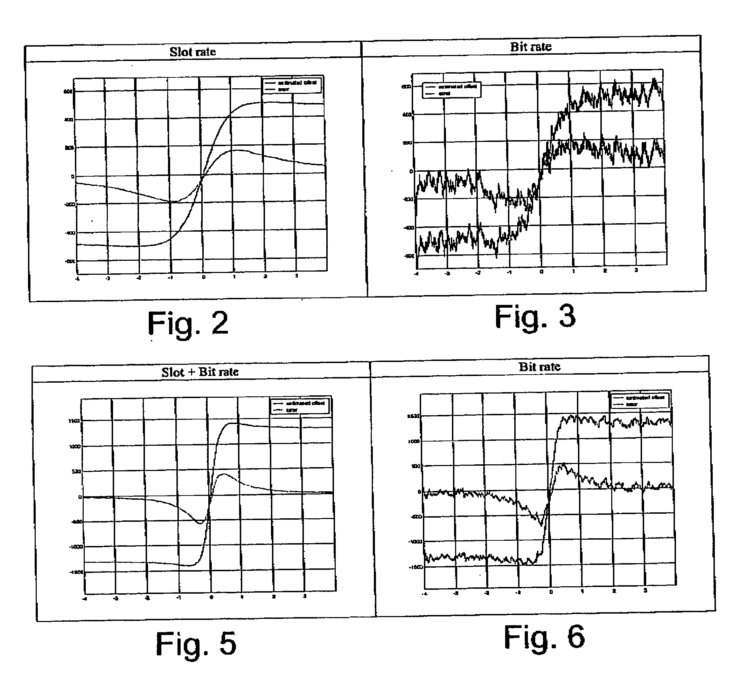

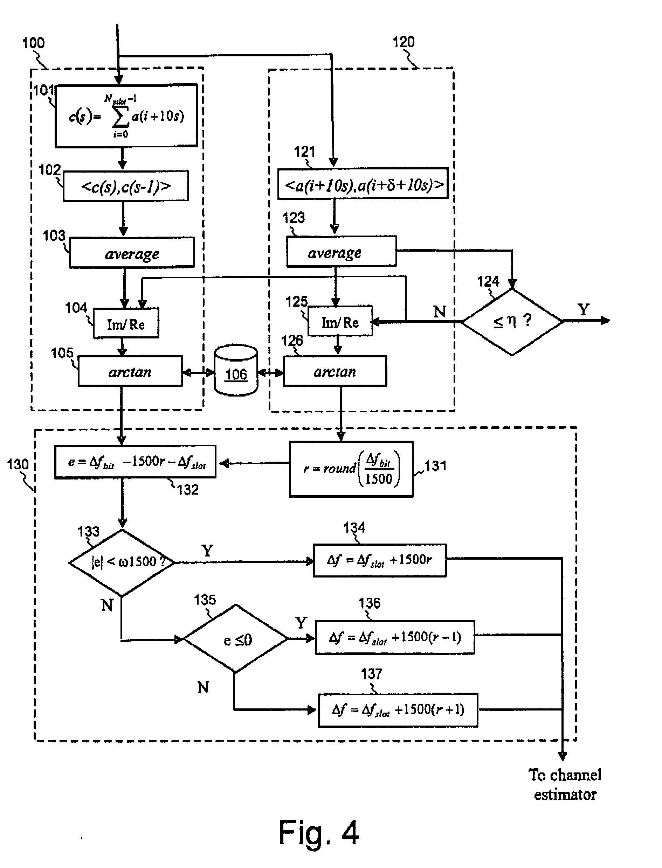

Figure 2 shows the results of the slot rate approach and Figure 3 shows the results of the bit rate approach based on the correlation of 2 pilot symbols separated by $3T_{bit}$. For example, if there are 6 pilot bits per slot as proposed for Third Generation mobile phone systems in Europe (3GPP), the first and fourth bits can be correlated.

To assess the performance both estimators, they have been tested it in a soft handover context when the offset covers the whole range of values in a short time frame. The results shown in Figures 2 and 3 are related to a UE speed of 250kmph and this gives the estimated frequency offset with respect to time as well as the error on this frequency. The following parameters are used: (weighting parameter) $\beta=0.99$, $d=100m$, $snr = 0\ dB$ on the Dedicated Physical Control CHannel (DPCCH). In these examples the error does not exceed 200Hz. The calculation of slot rate is more accurate (less noise on the results) than bit rate calculations but it does not allow frequency offsets above $\pm750$Hz to be determined due to the ambiguity explained above.

In order to be able to detect higher frequency offsets without ambiguity, and with good accuracy, a double estimation is performed in a method in accordance with an embodiment of the invention. Figure 4 shows a flow chart of the steps of the method. A first coarse estimation of frequency offset is performed at the bit level of pilot signals in block 120 and a second more accurate estimation of frequency offset is performed at the slot rate in block 100. A final block 130 combines and corrects, if necessary, the estimates produced by blocks 100 and 120 to derive a final output.

The Doppler frequency offset results in an offset between the frequency of a local oscillator in the receiver, e.g, a voltage controlled oscillator, or a numerically controlled local oscillator and the frequency of the received signal. The offset manifests itself as a rotating change in phase in the received signal. As indicated above the second frequency slot offset estimation from block 100 is ambiguous above a frequency offset of 1500Hz. The maximum offset frequency range that can be detected by block 120 depends on the pilot distance:

$$\Delta f = \frac{1}{(pos_0 - pos_1)T_{bit}}.$$

This is accurate enough to determine the number of multiples of 1500Hz, but cannot determine the overall offset with sufficient accuracy. The number of 1500Hz multiples determined by the bit rate estimation block 120 is called $r$. If we want to cope with frequency offsets induced by speeds of up to 350kmph, $\Delta f$ will take the range - 1300Hz, 1300Hz (i.e. an overall range of 2600Hz). We assume $\delta = pos_0 - pos_1 \le 5$ bits, i.e, the bit rate measurement operates on the received signal at 5 bit intervals, or more frequently. The second estimation 100 based on slot rate gives a result $\Delta \hat{f}_{slot}$ which is a calculation of the offset frequency modulo 1500Hz. The reconstructed offset is given by:

$$\Delta \hat{f} = 1500r + \Delta \hat{f}_{slot}$$

where r is the number of multiples of 1500Hz given by the bit rate estimation 120.

The bit rate estimation 120 begins by performing an autocorrelation, i.e. a complex dot product of two observations separated by a time difference $\delta$ (which represents a duration of one or more bits). Rather than rely on a single value, at step 123 the result of step 121 is optionally averaged with one or more previous results, e.g. to generate a running average. A preferred running average is the exponential averaging technique described above based on a weighting parameter $\beta$ raised to a power $n\text{-}j$. At steps 125, 126 an absolute phase difference is calculated by performing a division of the imaginary and real parts of the complex averaged value at step 125 and then performing an arctan function at step 126. The arctan function can be performed by use of a look-up table 106 for example but the present invention is not limited thereto.

At step 124 a check is made if the error is significant. The result of the division of the real and imaginary parts of the complex value is compared with a predetermined value $\eta$. If the error is very low (indicating no significant Doppler shift) the method is exited. If the test at step 124 shows the error is significant, the method continues. The predetermined value $\eta$ is selected to allow this differentiation.

From the absolute phase difference calculated over the short time period between pilot symbols it is possible to estimate how many times the offset frequency value is modulo 1500Hz in the frequency offset determined over the duration of a slot. Stated another way, based on the short-term observation of phase change, it is possible to calculate an approximate overall phase change (and hence frequency offset) over the slot period. The modulo number of 1500 Hz is represented by the quantity $r$ in the calculation at step 131. The overall offset is $\Delta \hat{f}_{bit}$ and

$$r = round\left(\frac{\Delta \hat{f}_{bit}}{1500}\right).$$

The slot rate estimation 100 begins at step 101 by accumulating a number of samples across the duration of a slot. At step 102 a cross-product is taken between an accumulated result over this present slot with a similar accumulation taken over a previous slot. An average is taken at step 103 between the result just calculated and previous results. A preferred running average is the exponential averaging technique described above based on a weighting parameter $\beta$ raised to a power $n\text{-}j$. At steps 104, 105 an absolute phase difference is calculated by performing a division of the imaginary and real parts of the complex averaged value at step 104 and performing an arctan function at step 105. The arctan function can be performed by use of a look-up table 106 but the present invention is not limited thereto.

A combination of the slot estimate resulting from block 100 and the value of $r$ could be used to directly calculate an overall frequency offset of the form:

$$\Delta \hat{f} = 1500r + \Delta \hat{f}_{slot}.$$

However, steps 132-137 address one further problem, which is the effect of noise when the value of the frequency offset determined by the bit rate unit 120 is close to a multiple of 750 Hz. In this case there can be need for a correction of $r$. It should be noted that $r$ can be positive or negative depending on whether the frequency offset is positive (mobile approaching base station) or negative (mobile moving away from the base station). The bit based estimator may appear not to be robust enough around 1500i + 750Hz. As an example, let us assume that the actual frequency offset is 700Hz and that, due to noise, the output of the pilot rate estimation (block 120) is higher than this and that due to the rounding of the value of $r$ it is rounded up to the value $r=1$ rather than 0. The accurate result from the slot rate estimator is added to the frequency correction based on $r$. The estimated frequency will be

$$\sim\!700 + 1500 = \sim\!2200 \text{ Hz.}$$

This is in error. To avoid this kind of behavior, an additional test is used, checking that:

$$\left|\Delta \hat{f}_{bit} - 1500r - \Delta \hat{f}_{slot}\right| < 1500\omega \text{ where } \omega \in [0,1].$$

As the value of $r$, can be either rounded up or down incorrectly, the right hand side of the above equation will provide values which lie within known limits. For example, if $r$ is correct then the differcnt between the frequency offset estimate from the bit based method should be almost equal to the sum of $1500r$ plus the frequency offset determined by the slot based estimator. If bigger values are obtained on the right hand side then there is an error in $r$. Accordingly, based on this test, the value of $r$ is corrected.

At step 132 a calculation of a quantity $e$ is made, which is the estimation of frequency offset output by the pilot rate unit (block 120) minus $1500r$, using the value of $r$ output by step 131, minus the estimation of frequency offset output by the slot rate unit (block 100). If the absolute value of $e$ is less than or equal to a predetermined value, e.g. 1500, then $r$ has been estimated correctly and the overall frequency offset is calculated at step 134 using the value of $r$ determined at step 131. However, if the test at step 132 shows an error has occurred, then the value of $r$ can be too high or too low. The correct value of $r$ is determined by a test at step 135 depending on the real value of $e$ and its relation to 0 and the overall frequency offset is calculated at steps 136, 137 using a corrected value of $r$.

Although, ideally, the slot rate estimation 100 accumulates over the number of samples in the slot it could accumulate over a shorter period so that, for example, in a 10 bit slot samples are accumulated over at least 3 bits of the slot, or it could be accumulated over a longer time period.

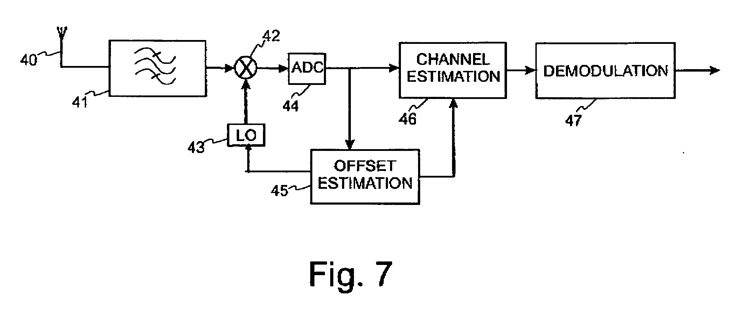

Figure 5 shows results obtained with this estimator, based on a combination of bit rate and slot rate measurements, at a speed of 700 kmph. The error is quite important (up to 500Hz) when the frequency varies dynamically but a lock to the frequency is obtained. Figure 6 shows the bit rate measurements taken alone.

Figure 7 shows an overall schematic diagram of a receive chain at a base station transceiver or User Equipment (UE). The receive chain comprises an analog front end and a digital elaboration part. The elements of the receive chain shown in Figure 7 are schematic and actual implementation may include other components. A received signal is received by an antenna 40 and applied to a band-pass filter 41 centred on the frequency band used for communication. The received band is down-converted to base band, or to an intermediate frequency (IF) by combining the received signal with a signal generated by a local oscillator 43, e.g. a voltage controlled oscillator, at a mixer 42. The down-converted signal is converted to digital form by an analogue-to-digital converter (ADC) 44. The ADC will generally oversample the received signal. Optionally, if the analogue signal has been downconverted to an intermediate frequency (IF), a downmixer on the digital side of the ADC mixes the digitized signal with a signal at the baseband frequency, e.g. from a numerically controlled oscillator, to thereby obtain the digitized baseband signal. The baseband digitised signal is applied to a frequency offset estimation unit 45 which performs the method just described above, i.e. any embodiment of the present invention. The determined overall frequency offset $f_0$ can be used in a variety of ways. One embodiment includes applying a correction to the received signal, e.g. a rotation of the complex signal representing a symbol.

In one embodiment the offset is used to correct local oscillators, e.g. voltage controlled oscillators or numerically controlled oscillators. The offset value is used to correct local oscillators used in the downmixing, e,g. the voltage controlled or numerically controlled oscillators to thereby correct for the offset. Optionally, the digitised signal is also applied to a channel estimation unit 46 which estimates characteristics of the receive channel. The estimation of frequency offset, determined by unit 45 is applied as an input to the channel estimation unit 46. The channel estimation unit 46 can use an algorithm matched to the detected frequency offset. The digitized signal is then demodulated 47 according to whatever modulation scheme is used in the transmission system. In the case of a 3G/LTMTS terminal, this will involve correlating the signal with locally-generated codes to extract the data and control signals.

The invention is not limited to the embodiments described herein, which may be modified or varied without departing from the scope of the invention.

## Claims

1. A method of determining a frequency offset in a terrestrial wireless communications system, comprising:

   determining a first estimation of frequency offset $f_1$ in a received signal over a first time period of the received signal;
   determining a second estimation of frequency offset $f_2$ in a received signal over a longer time period of the received signal; and
   determining an overall frequency offset $f_0$ based on both the first and second estimations.

2. A method according to claim 1, further comprising applying the determined overall frequency offset $f_0$ to a received signal.

3. A method according to claim 1 or 2 wherein the step of determining a second estimation of frequency offset is capable of determining the frequency offset modulo $n$ and the step of determining a first estimation of frequency offset is used to determine an estimate of number $r$ of multiples of the quantity $n$ and wherein the step of determining an overall frequency offset $f_0 = f_2 + rn$.

4. A method according to claim 3 further comprising verifying the value of $r$ before determining the overall frequency offset.

5. A method according to claim 4 wherein the verifying comprises performing the test:

$$f_1 - rn - f_2 < a\ predetermined\ value.$$

6. A method according to any one of the preceding claims wherein the step of a first estimation of frequency offset $f_1$

comprises correlating a pair of observations of the received signal.

7.  A method according to claim 5 wherein the symbols are pilot symbols.

8.  A method according to claim 6 or 7 wherein the symbols are separated by a distance of no more than 8 bits, or 5 bits.

9.  A method according to any one of the preceding claims wherein the communication system transmits traffic in time slots and the step of determining a second estimation of frequency offset is derived over the period of a single time slot.

10. Software for causing a processor to perform the method of any one of the preceding claims.

11. An frequency offset estimator for use in a receiver of a terrestrial wireless communications system, determining a first estimation of frequency offset $f_1$ in a received signal over a first time period of the received signal;

      means for determining a second estimation of frequency offset $f_2$ in a received signal over a longer time period of the received signal;
      means for determining an overall frequency offset $f_0$ based on both the first and second estimations.

12. The frequency offset estimator of claim 11, further comprising means for applying the determined overall frequency offset $f_0$ to the received signal.

13. The frequency offset estimator according to claim 11 or 12 wherein the means for determining a second estimation of frequency offset is adapted to determine the frequency offset modulo $n$ and the means for determining a first estimation of frequency offset is adapted to determine an estimate of number $r$ of multiples of the quantity $n$ and wherein the means for determining an overall frequency offset is adapted to determine the offset based on $f_0 = f_2 + rn$.

14. The frequency offset estimator according to claim 13 wherein means for determining the overall frequency offset is adapted to verify the value of $r$ before determining the overall frequency offset.

15. The frequency offset estimator according to claim 14 wherein means for determining the overall frequency offset is adapted to verify of the value of r by calculating:

$$f_1 - rn - f_2 < a\ predetermined\ value.$$

16. The frequency offset estimator according to any one of the claims 11 to 15, wherein the means for determining first estimation of frequency offset $f_1$ is adapted to correlate a pair of observations of the received signal.

17. The frequency offset estimator according to any one of the claims 11 to 16, wherein the communication system transmits traffic in time slots and the longer time period is the period of a single time slot and the shorter time period is a number of bits.

18. A wireless terminal comprising a frequency offset estimator according to any of the claims 11 to 17.

19. A base station receiver comprising a frequency offset estimator according to any of the claims 11 to 17.

20. A terrestrial wireless communications system comprising a Doppler frequency offset estimator according to any of the claims 11 to 17.

# Fig. 1

Fig. 3

Fig. 2

Fig. 6

Fig. 5

Fig. 4

Fig. 7

European Patent
Office

**EUROPEAN SEARCH REPORT**

Application Number

EP 05 29 2046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/33794 A (CADENCE DESIGN SYSTEMS INC [US]) 10 May 2001 (2001-05-10) * page 6, line 27 - page 7, line 28 * * figure 7 * ----- | 1-20 | INV. H04B7/26 H04L27/22 |
| A | US 5 272 446 A (CHALMERS HARVEY [US] ET AL) 21 December 1993 (1993-12-21) * column 1, line 37 - line 53 * * column 17, line 1 - column 19, line 25 * * figures 10,11 * ----- | 1,11 | |

TECHNICAL FIELDS
SEARCHED      (IPC)

H04B
H04L

The present search report has been drawn up for all claims

| Place of search | Date of completion of the search | Examiner |
|---|---|---|
| Munich | 1 December 2006 | Bodin, Carl-Magnus |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons
..............................................................................................
& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 05 29 2046

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2006

| Patent document cited in search report | | Publication date | Patent family member(s) | | Publication date |
|---|---|---|---|---|---|
| WO 0133794 | A | 10-05-2001 | AU | 1240401 A | 14-05-2001 |
| | | | TW | 518858 B | 21-01-2003 |
| | | | US | 6532271 B1 | 11-03-2003 |
| US 5272446 | A | 21-12-1993 | NONE | | |

EPO FORM P0459

For more details about this annex : see Official Journal of the European Patent Office, No. 12/82